(19) Europäisches Patentamt
European Patent Office
Office européen des brevets

(11) Publication number: **0 321 691 B1**

(12) **EUROPEAN PATENT SPECIFICATION**

(45) Date of publication of patent specification: **29.09.93**

(51) Int. Cl.[5]: **C08G 63/91**, C08G 63/60

(21) Application number: **88118797.5**

(22) Date of filing: **11.11.88**

The file contains technical information submitted after the application was filed and not included in this specification

(54) **Process for producing aromatic polyester.**

(30) Priority: **17.11.87 JP 288539/87**

(43) Date of publication of application:
**28.06.89 Bulletin 89/26**

(45) Publication of the grant of the patent:
**29.09.93 Bulletin 93/39**

(84) Designated Contracting States:
**BE CH DE FR GB IT LI NL SE**

(56) References cited:
**EP-A- 0 196 785**
**EP-A- 0 252 415**
**DE-A- 2 525 092**

**PATENT ABSTRACTS OF JAPAN, vol. 7, no. 181 (C-180) (1326) 10th August 1983; & JP-A-58 87125**

**PATENT ABSTRACTS OF JAPAN, vol. 7, no. 181 (C-180) (1326) 10th August 1983; & JP-A-58 84821**

(73) Proprietor: **IDEMITSU PETROCHEMICAL CO. LTD.**
**1-1, Marunouchi 3-chome Chiyoda-ku**
**Tokyo 100(JP)**

(72) Inventor: **Hayashi, Hideo**
**Idemitsu Petrochemical Co., Ltd. 1660, Kamiizumi**
**Sodegaura-machi Kimitsu-gun**
**Chiba-ken(JP)**
Inventor: **Murai, Hideya**
**Idemitsu Petrochemical Co., Ltd. 1660, Kamiizumi**
**Sodegaura-machi Kimitsu-gun**
**Chiba-ken(JP)**
Inventor: **Inaba, Nobuyuki**
**Idemitsu Petrochemical Co., Ltd. 1660, Kamiizumi**
**Sodegaura-machi Kimitsu-gun**
**Chiba-ken(JP)**

(74) Representative: **Türk, Gille, Hrabal, Leifert**
**Brucknerstrasse 20**
**D-40593 Düsseldorf (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

### BACKGROUND OF THE INVENTION

1. Field of the invention

The present invention relates to a process for producing aromatic polyesters, in particular liquid-crystalline aromatic polyester useful as raw materials for fiber, film, injection-molded parts and the like.

2. Description of the technical background

From JP-B-18 016/1981 a process for producing an aromatic polyester is known, wherein a polyester such as polyethylene terephthalate and polybutylene terephthalate is acid-decomposed with an acyloxy aromatic carboxylic acid such as p-acetoxybenzoic acid to produce polyester fragments and then the resulting fragments are copolymerized.

In this known process, however, a large amount of insoluble, infusible matter regarded as a self-condensate of acyloxy aromatic carboxylic acid is undesirably generated. Therefore, aromatic polyesters prepared according to this process, have problems such as poor uniformity and inferior mechanical properties.

EP-A-0 196 785 describes the preparation of cholesteric liquid-crystal polyesters by mixing and reacting 50 mol % of polyethylene terephthalate (A), 50 mol % of p-acetoxy benzoic acid (B) and 1 mol % diacetoxyhydroquinone (C) as well an optically active compound (D).

From DE-A-25 25 092 a process for producing polyesters is already known wherein the polyester containing radicals of formulae (A) and (B) are reacted with an acyloxy benzoic acid providing radicals of formula (B) in the presence of an aromatic diol and of a dicarboxylic acid.

EP-A-0 252 415 describes a process for preparing a polyester polymer which comprises reacting a polyethylene terephthalate (A) with an acyloxy-aromatic carboxylic acid (B) and an ester of the formula RCOO-Ar-OCOR (C) in the presence of a diimide dicarboxylic acid (D).

The aromatic polyesters obtained according to the above known processes have the disadvantage that their content of insoluble matter is relatively high which results in poor uniformity and inferior mechanical properties, in particular inferior tensile strength of the obtained product.

### SUMMARY OF THE INVENTION

Therefore, the object of the present invention is to produce aromatic polyesters having a very low content of insoluble matter and therefore exhibiting an excellent uniformity as well as a high mechanical strength, in particular a high tensile strength.

This object can be achieved according to the present invention by providing a process for producing aromatic polyester, which comprises

(a) mixing 5 to 70 mol %, preferably 20 to 60 mol % (as calculated by converting the repeating unit mentioned below into one molecule) of polyethylene terephthalate (A) with repeating units represented by formula (I)

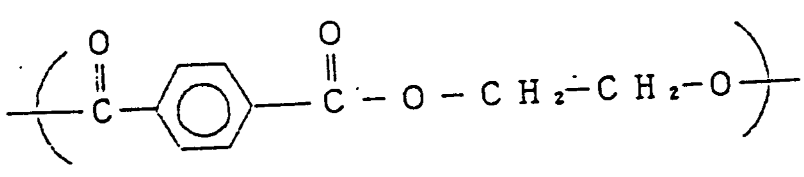
(I)

having in inherent viscosity at 30 °C of 0,05 to 1,5 dl/g in an equal weight mixed solvent of tetrachlorohexane and phenol and 95 to 30 mol %, preferably 90 to 40 mol %, of an acyloxy benzoic acid (B) represented by general formula (II)

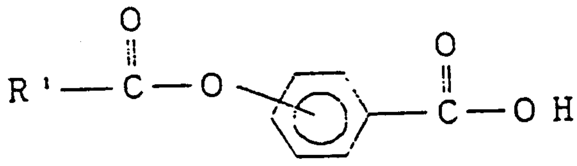 (II)

with 0,1 to 20 mol %, preferably 1 to 10 mol %, based on the total amount of (A) and (B), of a diacyloxy aromatic compound (C) represented by general formula (III)

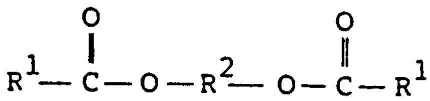 (III)

wherein
$R^1$ represents an alkyl group with 1 to 4 carbon atoms, and
$R^2$ is selected from the group consisting of

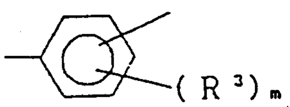 , 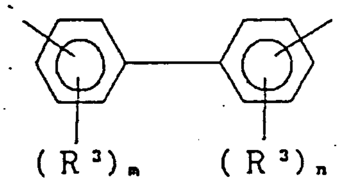 , 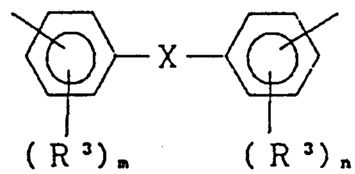

and

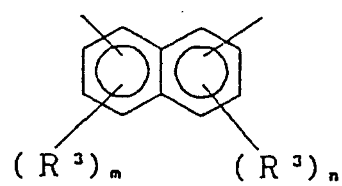

(wherein $R^3$ is selected from the group consisting of a hydrogen atom, a halogen atom, an alkyl group with 1 to 4 carbon atoms and an alkoxy group with 1 to 4 carbon atoms, m and n each are independently an integer of 1 to 4, and X is selected from the group consisting of $-CH_2-$, $-(CH_2)_2-$,

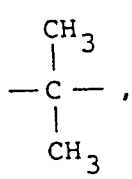 , $-O-$ , 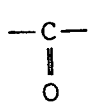 , $-S-$ , 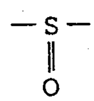 , 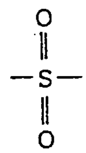 , 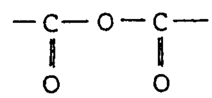 .

and

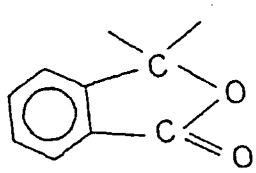

(b) reacting the resulting mixture while stirring at a temperature of 150 to 350 °C for 30 minutes to 3 hours, preferably at a temperature of 250 to 350 °C for 30 minutes to 2 hours, in an, inert gas atmosphere to produce polyester fragments and

(c) further reacting the polyester fragments thus produced while stirring at a temperature of 250 to 350 °C for 5 minutes to 24 hours under a vacuum of 6,67 kPa (50 mmHg) or less, preferably at a temperature of 275 to 320 °C for 1 to 8 hours under a vacuum of 133,3 Pa (1 mmHg) or less.

According to the present invention aromatic polyesters, in particular liquid-crystalline aromatic polyesters, having a very low content of insoluble, infusible matter and thus exhibiting a high uniformity and excellent mechanical properties, in particular an excellent tensile strength, can be produced. The aromatic polyester produced according to the present invention can be effectively used as a superior material for fiber, film and injection-moled parts.

DESCRIPTION OF PREFERRED EMBODIMENTS

Polyethylene terephthalate used as component (A) in the process of the present invention is produced according to a conventional process, i.e. the condensation polymerization of terephthalic acid or its dialkylester (including dimethylester) with ethylene glycol.

Polyethylene terephthalate used in the process of the present invention has a repeating unit described above, and its inherent viscosity at 30 °C in a mixed solvent of tetrachlroethane and phenol in equal percent by weight is 0,05 to 1,5 dl/g, preferably 0,1 to 1,0 dl/g. If the inherent viscosity is smaller than 0,05 dl/g, the resulting polymer will be poor in thermostability, while if the inherent viscosity exceeds 1,5 dl/g, the resulting polymer will have insoluble and infusible components.

Polyethylene terephthalate is used at a ratio of 5 to 70 mol %, preferably 20 to 60 mol %, to the total amount of said polyethylene terephthalate (A) and acyloxy benzoic acid (B). When the amount of polyethylene terephthalate is smaller than 5 mol %, the product will become poor in moldability, while when the amount of it exceeds 70 mol %, the product will show no melt anisotropy.

Acyloxy benzoic acid (B) in the present invention includes acetoxy benzoic acid, propionyloxy benzoic acid, butylyloxy benzoic acid and isobutylyloxy benzoic acid. Any acyloxy benzoic acids with the acyloxy radical positioning at ortho, meta or para may be used, but those with the acyloxy radical positioning at para are most favorable.

Acyloxy benzoic acid is used at a ratio of 95 to 30 mol %, preferably 90 to 40 mol %, to the total amount of polyethylene terephthalate (A) and acyloxy benzoic acid (B). When the amount of acyloxy benzoic acid deviates from the range mentioned above, the product shows disadvantages such as disappearance of melt anisotropy and poor moldability.

The diacyloxy aromatic compound (C) in the present invention is a compound represented by the following general formula (III) as mentioned previously:

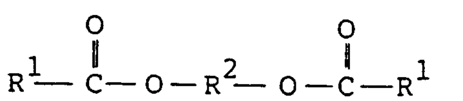

..........(III)

When $R^4$ is a radical represented by the general formula:

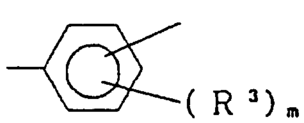

($R^3$ and m are the same as defined above), the diacyloxy aromatic compound includes 1,4-diacetoxy benzene, diacetoxy toluene, diacetoxy chlorobenzene and diacetoxy methoxy benzene.

Where $R^2$ is a radical represented by the formula:

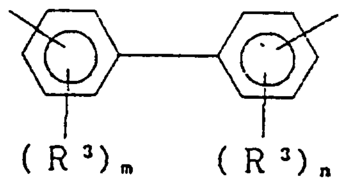

(wherein $R^3$, m and n are the same as defined above,) the diacyloxy aromatic compound includes, for example; 4,4'-diacetoxybiphenyl, 2,2'-dimethyl-4,4'-diacetoxybiphenyl, and 3,3'-dimethoxy-4,4-diacetoxy-4,4'-diacetoxybiphenyl.

Where $R^2$ is a radical represented by the formula:

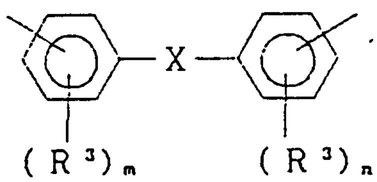

(wherein $R^3$, X, m and n are the same as defined above,) the diacyloxy aromatic compound includes, for example; bis(4-acetoxyphenyl)methane, bis(4-acetoxyphenyl)ethane, 2,2-bis(4-acetoxyphenyl)propane, 4,4'-diacetoxydiphenylether, 4,4'-diacetoxybenzophenone, 4,4'-diacetoxydiphenylsulfide, 4,4-diacetoxydiphenylsulfoxide, 4,4'-diacetoxydiphenylsulfone, p-acetoxybenzoic acid anhydride, phenolphthalein diacetate, 4,4'-dimethoxy-3,3'-diacetoxydiphenylether, 2,4'-dichloro-3,3'-diacetoxydiphenylether, 4,4'-diacetoxy-3,3',5,5'-tetramethyldiphenylsulfone.

Where $R^2$ is a radical represented by the formula:

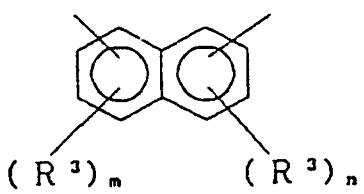

(wherein $R^3$, m and n are the same as defined above,) the diacyloxy aromatic compound includes, for example; 1,4-diacetoxynaphthalene, 1,5-diacetoxynaphthalene, 1,6-diacetoxynaphthalene, 2,7-diacetoxynaphthalene, 1-chloro-2,6-diacetoxynaphthalene, 1-methyl-2,6-diacetoxynaphthalene, and 1-methoxy-2,6-diacetoxynaphthalene.

Above all, 1,4-diacetoxybenzene, 4,4'-diacetoxybiphenyl, 4,4'-diacetoxybenzophenone and 4,4'-diacetoxydiphenylsulfone are preferable.

A single diacyloxy aromatic compound or a mixture of two or more diacyloxy aromatic compounds can be used in the present invention.

A diacyloxy aromatic compound (C) mentioned above is used at a ratio of 0.1 to 20 mol %, preferably 1 to 10 mol %, to the total amount of polyethylene terephthalate (A) and acyloxy aromatic carboxylic acid (B). When the amount of diacyloxy aromatic compound (C) used is less than 0.1 mol %, insoluble, infusible particles are generated in such quantities that uniformity of the product decreases and toughness is hardly improved. Meanwhile, the amount of the compound (C) used exceeds 20 mol %, the polymerization reaction does not proceed efficiently.

According to the present invention, polyethylene terephthalate (A), acyloxy aromatic carboxylic acid (B) and a diacyloxy aromatic compound (C) are mixed at ratios mentioned above and reacted under appropriate conditions, i.e. the mixture of those compounds are reacted while stirring at a temperature of 150 to 350 °C

for 30 minutes to 3 hours, preferably at a temperature of 250 to 350 °C for 30 minutes to 2 hours, in an inert gas atmosphere to produce polyester fragments.

The polyester fragments thus produced are further reacted while stirring at a temperature of 250 to 350 °C for 5 minutes to 24 hours under vacuum of 6,7 kPa (50 mmHg) or less, preferably at a temperature of 275 to 320 °C for 1 to 8 hours under vacuum of 133,3 Pa (1 mmHg) or less.

In the reaction, acyloxy aromatic carboxylic acid (B) and the diacyloxy aromatic compound (C) are considered to be concurrently combined with polyethylene terephthalate (A) polymer in various forms, namely; the compounds (B) and (C) are taken up into the main chain of polyethylene terephthalate (A) or respective polymers and copolymer of acyloxy benzoic acid (B) and diacyloxy aromatic compound (C) are combined with the main chain of polyethylene terephthalate (A).

According to the present invention, the insoluble, infusible matter is hardly produced, so liquid-crystalline aromatic polyester with high uniformity and mechanical strength can be produced.

Accordingly, the aromatic polyester produced according to the present invention is effectively used as superior material for fiber, film and injection-molded parts.

The present invention will now be further illustrated by certain examples and references which are provided for purposes of illustration.

Melt index (MI) of polymer is measured at 300 °C with melt indexer P-01 of Toyo Seiki using the following test loads:

325 g load for a composition ratio of 60 mol % of p-acetoxy benzoic acid and 40 mol % of polyethylene terephthalate, and 2160 g load for the composition ratios of 80 and 40 mol % of p-acetoxy benzoic acid and 20 and 60 mol % of polyethylene terephthalate, respectively.

## Example 1

A mixture of 76.87 g (0.40 mol) of polyethylene terephthalate having an inherent viscosity of 0.68 dl/g, 108.1 g (0.60 mol) of p-acetoxy benzoic acid and 59.35 g (0.19 mol) of 2,2-bis(4-acetoxyphenyl)propane was placed into a 500 ml flask equipped with a vacuum stirrer, a short distilling column and an inlet for nitrogen. Said flask was evacuated and purged with nitrogen gas three times, and then dried at 100 °C under 266,6 Pa (2 mmHg) for 30 minutes. Subsequently, the mixture in the flask was stirred in an atmosphere of nitrogen gas at 275 °C for one hour. Acetic acid was distilled away gradually from the flask, to obtain a polyester fragment having a low melting viscosity.

Said polyester fragment was polymerized while stirring at 275 °C under a vacuum of 6,7 Pa (0.05 mmHg) for 8.5 hours, to obtain an opaque white aromatic polyester with a high melting viscosity. The melt index (MI) of the resulting aromatic polyester was 25.3 g/10 minutes.

## Example 2

The procedure of Example 1 was repeated except that 20.88 g (0.070 mol) of 4,4'-diacetoxybenzophenone was used instead of 59.35 g (0.19 mol) of 2, 2'-bis(4-acetoxyphenyl)propane and that the period of polymerizing the polyester fragment was 5 hours, to obtain an aromatic polyester having MI of 3.22g/10 minutes.

## Example 3

The procedure of Example 1 was repeated except that 3.88 g (0.02 mol) of 1,4-diacetoxybenzene was used instead of 59.35 g (0.19 mol) of 2,2-bis(4-acetoxyphenyl)propane and that the period of polymerizing the polyester fragment was 4.5 hours, to obtain an aromatic polyester having MI of 2.40 g/10 minutes.

## Example 4

The procedure of Example 1 was repeated except that 13.51 g (0.05 mol) of 4,4'-diacetoxybiphenyl was used instead of 59.35 g (0.19 mol) of 2,2-bis(4-acetoxyphenyl)propane and that the period of polymerizing the polyester fragment was 5 hours, to obtain an aromatic polyester having MI of 5.50 g/10 minutes.

## Example 5

The procedure of Example 1 was repeated except that 3.42 g (0.01 mol) of p-acetoxy benzoic anhydride was used instead of 59.35 g (0.19 mol) of 2,2-bis(4-acetoxyphenyl) propane and that the period

of polymerizing the polyester fragment was 6.0 hours, to obtain an aromatic polyester having MI of 10.0 g/10 minutes.

Comparative Example 1

The procedure of Example 1 was repeated except that 59.35 g (0.19 mol) of 2,2-bis(4-acetoxyphenyl)-propane was not added, and that the polymerization period of the polyester fragment was 5 hours, to obtain an aromatic polyester having MI of 123 g/10 minutes.

Example 6

A mixture of 38.43 g (0.20 mol) of polyethylene-terephthalate having an inherent viscosity of 0.68 dl/g, 144.1 g (0.80 mol) of p-acetoxy benzoic acid and 9.71 g (0.05 mol) of 1,4-diacetoxybenzene was placed into 500 ml flask equipped with a vacuum stirrer, a short distilling column and an inlet for nitrogen. Said flask was evacuated and purged with nitrogen gas three times, and then dried at 100 °C , under 266,6 Pa (2 mm Hg) for 30 minutes. Subsequently, the mixture in the flask was stirred in an atmosphere of nitrogen gas at 300 °C for an hour. Acetic acid was distilled away gradually from the flask, and polyester fragment having low melting viscosity was obtained.

Said polyester fragment was polymerized while stirring at 300 °C under 6,7 Pa (0.05 mm Hg) for 2.5 hours, to obtain an opaque white aromatic polyester having a high melting viscosity. The MI of the resulting aromatic polyester was 0.005 g/10 minutes.

Example 7

The procedure of Example 6 was repeated except that 0.40 g (0.001 mol) of phenolphthalein diacetate was used instead of 9.71 g (0.05 mol) of 1, 4-diacetoxybenzene, and that the period of polymerizing the polyester fragment was 3.5 hours, to obtain an aromatic polyester having MI of 0.008 g/10 minutes.

Example 8

The procedure of Example 6 was repeated except that 10.81 g (0.04 mol) of 4,4'-diacetoxybiphenyl was used instead of 9.71 g (0.05 mol) of 1,4-diacetoxybenzene and that the period of polymerizing the polyester fragment was 2 hours, to obtain an aromatic polyester having MI of 0.008 g/10 minutes.

Example 9

The procedure of Example 6 was repeated except that 61.85 g (0.185 mol) of 4,4'-diacetoxydiphenylsulfone was used instead of 9.71 g (0.05 mol) of 1,4-diacetoxybenzene, and that the period of polymerizing the polyester fragment was 5.5 hours, to obtain an aromatic polyester having MI of 0.015 g/10 minutes.

Comparative Example 2

The procedure of Example 6 was repeated except that 9.71 g (0.05 mol) of 1,4-diacetoxybenzene was not added, and that the period of polymerizing the polyester fragment was 2 hours, to obtain an aromatic polyester having MI of 25 g/10 minutes.

Example 10

The procedure of Example 1 was repeated except that 115.3 g (0.60 mol) of polyethylene terephthalate having inherent viscosity of 0.68 dl/g, 77.68 g (0.40 mol) of p-acetoxy benzoic acid, and 8.95 g (0.03 mol) of 4,4'-diacetoxybenzophenone were used as the starting materials and that the period of the polymerizing polyester fragment was 5 hours, to obtain an aromatic polyester having MI of 280 g/10 minutes.

Example 11

The procedure of Example 10 was repeated except that 0.625 g (0.002 mol) of 2,2-bis(4-acetoxyphenyl)propane was used instead of 8.95 g (0.03 mol) of 4, 4'-diacetoxybenzophenone, and that the period of polymerizing the polyester fragment was 6 hours, to obtain an aromatic polyester having MI of 220 g/10

minutes.

Comparative Example 3

The procedure of Example 10 was repeated except that 8.95 g (0.03 mol) of 4,4'-diacetoxybenzophenone was not added, to obtain an aromatic polyester having MI of 1500 g/10 minutes.

Evaluation test

The content of insoluble matter and tensile strength of the polyesters produced in the Examples and the Comparative Examples are measured by the following methods and the results are shown in Table 1 along with the MI of the polyesters.

(1) Molding method

Aromatic polyester produced in the Examples and the Comparative Examples were extruded into strands at a temperature of 270 °C to 300 °C and then the resulting strands were cut into pellets. Successively, the pellets thus produced were spun into fiber with a diameter of 0.5 mm by a melt spinning machine of Japan Rheology Co.

| Present conditions: | |
|---|---|
| Molding temperature | 270 to 320 °C |
| Shear rate | 40 $sec^{-1}$ |
| Diameter of die | 2 mm |
| L/D | 20 |

(2) Determining method of insoluble matter

Two grams of the polymer was weighed out and dissolved in 200 ml of p-chlorophenol at 130 °C. The insoluble matter was separated by a centrifugal separator (CM-60RN Type of TOMY SEIKO) at 9000 rpm and dried at 130 °C. The dried material was weighed to calculate its weight percentage.

(3) Measurement of tensile strength

The tensile strength of the fiber with a diameter of 0.5 mm was measured with a tensile testing machine (DSC-2000 of Shimazu Seisakusho) under condition of a temperature of 23 °C, a stress rate of 5 mm/min. and the distance between clamps at 100 mm.

Table 1

| No. | MI (g/min) | Content of insoluble component* (% by weight) | Tensile strength (MPa) |
|---|---|---|---|
| Example 1 | 25.3 | 0.028 | 410 |
| Example 2 | 3.22 | 0.032 | 550 |
| Example 3 | 2.40 | 0.073 | 490 |
| Example 4 | 5.55 | 0.045 | 510 |
| Example 5 | 10.0 | 0.087 | 475 |
| Comparative Example 1 | 123 | 0.23 | 241 |
| Example 6 | 0.005 | 0.47 | 421 |
| Example 7 | 0.008 | 0.83 | 400 |
| Example 8 | 0.008 | 0.53 | 420 |
| Example 9 | 0.015 | 0.20 | 390 |
| Comparative Example 2 | 25 | 3.7 | 130 |
| Example 10 | 280 | 0.023 | 375 |
| Example 11 | 220 | 0.051 | 390 |
| Comparative Example 3 | 1500 | 0.10 | 210 |

* As the result of testing the temperature dependency with observing the insoluble component by the use of polarizing microscope manufactured by Nippon Kogaku Co., Ltd. equipped with the hot stage manufactured by Linkam Co., Ltd., no melting was observed even when the temperature exceeds the melting point of the polymer by several ten°C; so it was clear that the said insoluble component was infusible.

The results given in Table 1 show that the polymers obtained according to Examples have lower melt index, smaller amounts of insoluble or infusible components, and remarkably higher tensile strength, than those of the case where diacyloxy aromatic compound was not added (Comparative Examples).

## Claims

**1.** A process for producing aromatic polyester which consists of

(a) mixing

5 to 70 mol % (as calculated by converting the repeating unit mentioned below into one molecule) of polyethylene terephthalate (A) with repeating unit represented by formula (I),

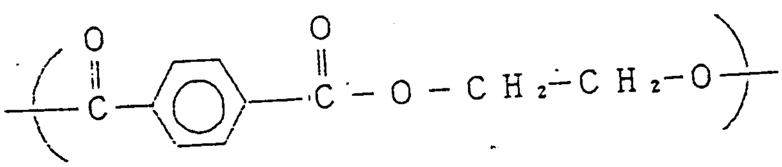

(I)

having an inherent viscosity at 30 °C of 0,05 to 1,5 dl/g in an equal weight mixed solvent of tetrachloroethane and phenol, and 95 to 30 mol % of an acyloxy benzoic acid (B) represented by general formula (II),

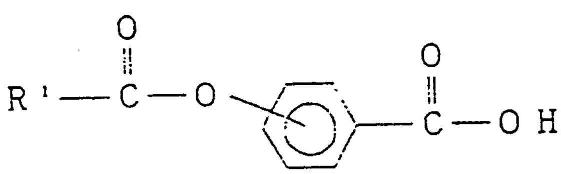

(II)

with 0,1 to 20 mol %, based on the total amount of (A) and (B), of a diacyloxy aromatic compound (C) represented by general formula (III)

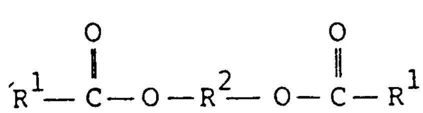

(III)

wherein

$R^1$ represents an alkyl group with 1 to 4 carbon atoms, and

$R^2$ is selected from the group consisting of

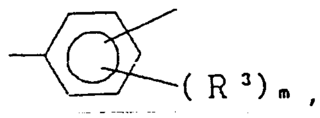 , 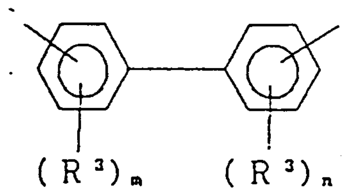 , 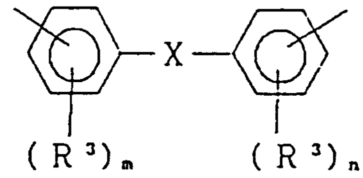

and

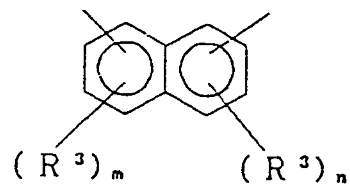

(wherein $R^3$ is selected from the group consisting of a hydrogen atom, a halogen atom, an alkyl group with 1 to 4 carbon atoms and an alkoxy group with 1 to 4 carbon atoms, m and n each are independently an integer of 1 to 4, and X is selected from the group consisting of-$CH_2$--, --$(CH_2)_2$--,

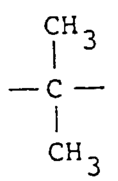 , $—O—$ , 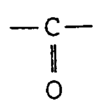 , $—S—$ , 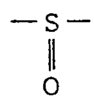 , 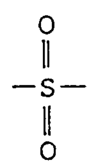 , 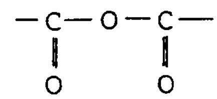

and

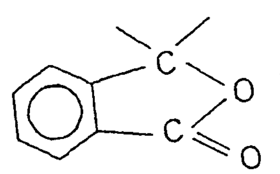

b) reacting the resulting mixture while stirring at a temperature of 150 to 350 °C for 30 minutes to 3 hours in an inert gas atmosphere and

c) further reacting the mixture while stirring at a temperature of 250 to 350 °C for 5 minutes to 24 hours under a vacuum of 6,7 kPa (50 mmHg) or less.

**2.** The process according to claim 1 wherein in step(a) said polyethylene terephthalate (A) is used at a ratio Of 20 to 60 mol % based on the total amount of (A) + (B), said acyloxy benzoic acid (B) is used at a ratio of 90 to 40 mol % based on the total amount of (A) + (B) and said diacyloxy aromatic compound (C) is used at a ratio of 1 to 10 mol % based on the total amount of (A) + (B).

**3.** The process according to claim 1 or 2, wherein in step (b) the mixture of compounds (A), (B) and (C) is reacted while stirring at a temperature of 250 to 350 °C for 30 minutes to 2 hours in an inert gas atmosphere, and in step (c) the mixture is further reacted while stirring at a temperature of 275 to 320 °C for 1 to 8 hours under a vacuum of 133,3 Pa (1 mmHg) or less.

## Patentansprüche

**1.** Verfahren zur Herstellung eines aromatischen Polyesters, das darin besteht, daß man

a) 5 bis 70 Mol-% (berechnet durch Umwandlung der nachstehend angegebenen wiederkehrenden Einheit in ein Molekül) Polyethylenterephthalat (A) mit einer wiederkehrenden Einheit der Formel (I)

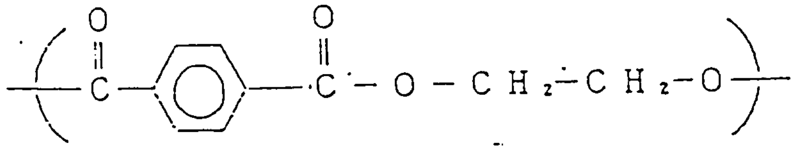

(I)

mit einer Eigenviskosität (inneren Viskosität) bei 30 °C von 0,05 bis 1,5 dl/g in einem Lösungsmittelgemisch aus gleichen Gewichtsmengen Tetrachlorethan und Phenol, und 95 bis 30 Mol-% einer Acyloxybenzoesäure (B) der allgemeinen Formel (II)

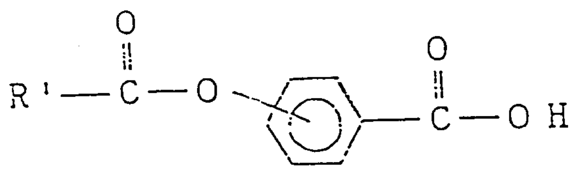

(II)

mischt mit 0,1 bis 20 Mol-%, bezogen auf die Gesamtmenge von (A) und (B), einer Diacyloxy-aromatischen Verbindung (C) der allgemeinen Formel (III)

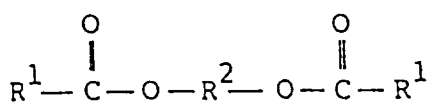

(III)

worin:

$R^1$ steht für eine Alkylgruppe mit 1 bis 4 Kohlenstoffatomen und

$R^2$ ausgewählt wird aus der Gruppe, die besteht aus

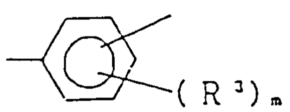,

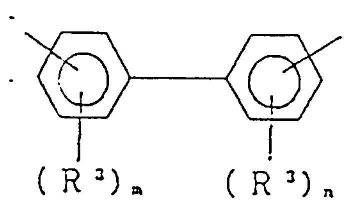,

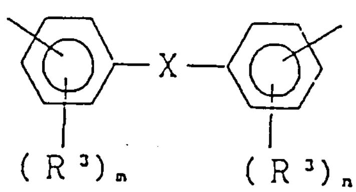

und

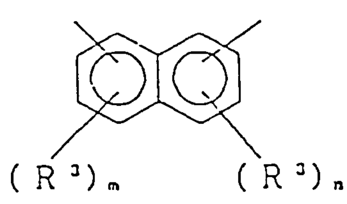

(worin $R^3$ ausgewählt wird aus der Gruppe, die besteht aus einem Wasserstoffatom, einem Halogenatom, einer Alkylgruppe mit 1 bis 4 Kohlenstoffatomen und einer Alkoxygruppe mit 1 bis 4 Kohlenstoffatomen, m und n jeweils unabhängig voneinander stehen für eine ganze Zahl von 1 bis 4 und X ausgewählt wird aus der Gruppe, die besteht aus $-CH_2-$, $-(CH_2)_2-$,

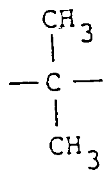, —O—, 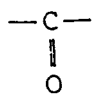, —S—, 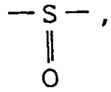, 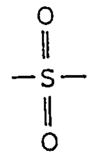, 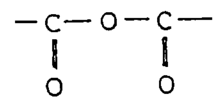

und

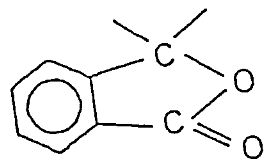

b) die resultierende Mischung unter Rühren bei einer Temperatur von 150 bis 350 °C 30 min bis 3 h lang in einer Inertgasatmosphäre reagieren läßt und

c) die Mischung unter Rühren bei einer Temperatur von 250 bis 350 °C weitere 5 min bis 24 h lang unter einem Vakuum von 6,7 kPa (50 mm Hg) oder weniger reagieren läßt.

**2.** Verfahren nach Anspruch 1, bei dem in der Stufe (a) das Polyethylenterephthalat (A) in einem Mengenanteil von 20 bis 60 Mol-%, bezogen auf die Gesamtmenge von (A) + (B), die Acyloxybenzoesäure (B) in einem Mengenanteil von 90 bis 40 Mol-%, bezogen auf die Gesamtmenge von (A) + (B), und die Diacyloxy-aromatische Verbindung (C) in einem Mengenanteil von 1 bis 10 Mol-%, bezogen auf die Gesamtmenge von (A) + (B), verwendet werden.

**3.** Verfahren nach Anspruch 1 oder 2, bei dem in der Stufe (b) die Mischung der Verbindungen (A), (B) und (C) unter Rühren bei einer Temperatur von 250 bis 350 °C 30 min bis 2 h lang in einer Inertgasatmosphäre reagieren gelassen wird und in der Stufe (c) die Mischung unter Rühren bei einer Temperatur von 275 bis 320 °C 1 bis 8 h lang unter einem Vakuum von 133,3 Pa (1 mm Hg) oder weniger weiter reagieren gelassen wird.

## Revendications

**1.** Procédé pour produire un polyester aromatique, qui consiste à,

mélanger (a):

de 5 à 70 moles % (calculé en transformant l'unité périodique mentionnée ci-dessous en une molécule) de polyéthylène téréphtalate (A) avec l'unité périodique représentée par la formule (I),

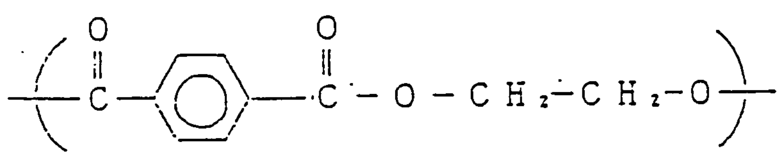 (I)

ayant une viscosité inhérente à 30 °C de 0,05 à 1,5 dl/g dans un solvant constitué d'un mélange de poids égaux de tétrachloroéthane et de phénol,et

de 95 à 30 moles % d'un acide acyloxybenzoïque (B) représenté par la formule générale (II),

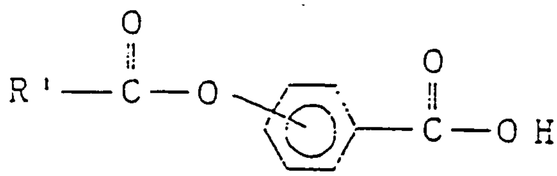 (II)

avec de 0,1 à 20 moles %, basé sur la quantité totale de (A) et de (B), d'un composé diacyloxyaromatique (C) représenté par la formule générale (III)

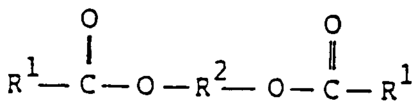 (III)

où
$R^1$ représente un groupe alkyle ayant de 1 à 4 atomes de carbone, et
$R^2$ est choisi dans le groupe constitué par

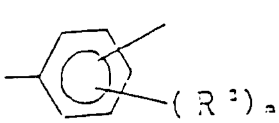 , 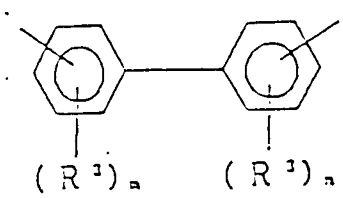 , 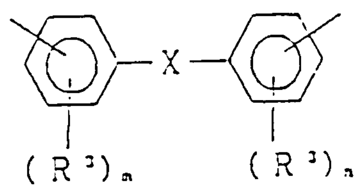

et

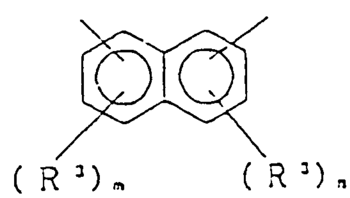

(où $R^3$ est choisi dans le groupe constitué par un atome d'hydrogène, un atome d'halogène, un groupe alkyle ayant de 1 à 4 atomes de carbone et un groupe alcoxy ayant de 1 à 4 atomes de carbone, m et n sont chacun, de façon indépendante, un nombre entier de 1 à 4, et X est choisi dans le groupe constitué par $-CH_2-$, $-(CH_2)_2-$,

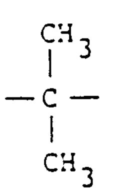 , —O— , 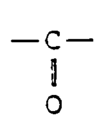 , —S— , 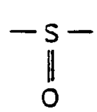 , 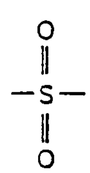 , 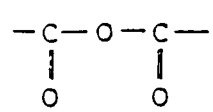

et

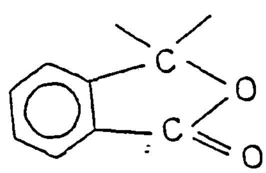

b) faire réagir le mélange résultant tout en agitant à une température de 150 à 350 ° C pendant de 30 minutes à 3 heures, dans une atmosphère de gaz inerte, et

c) faire encore réagir le mélange tout en agitant à une température de 250 à 350 ° C pendant de 5 minutes à 24 heures, sous un vide de 6,7 kPa (50 mmHg) ou moins.

**2.** Procédé selon la revendication 1, où dans l'étape (a) ledit polyéthylène téréphtalate (A) est utilisé dans une proportion de 20 à 60 moles %, basée sur la quantité totale de (A) + (B), ledit acide acyloxybenzoïque (B) est utilisé dans une proportion de 90 à 40 moles %, basée sur la quantité totale de (A) + (B), et ledit composé diacyloxyaromatique (C) est utilisé dans une proportion de 1 à 10 moles %, basée sur la quantité totale de (A) + (B).

**3.** procédé selon la revendication 1 ou 2, où dans l'étape (b) on fait réagir le mélange des composés (A), (B) et (C) tout en agitant à une température de 250 à 350 ° C pendant de 30 minutes à 2 heures, dans une atmosphère de gaz inerte, et dans l'étape (c) on fait encore réagir le mélange tout en agitant à une température de 275 à 320 ° C pendant de 1 à 8 heures, sous un vide de 133,3 Pa (1 mmHg) ou moins.